# EUROPÄISCHE PATENTSCHRIFT

(11) **EP 2 876 475 B1**
(45) Veröffentlichungstag und Bekanntmachung des Hinweises auf die Patenterteilung: **17.04.2019**
(21) Anmeldenummer: 14003904.1
(22) Anmeldetag: 20.11.2014
(51) Int. Cl.: G02B 6/44

(54) **Teilesatz zum Herstellen einer Lichtwellenleiter-Anschlussvorrichtung**
Kit of parts for producing a fibre optic cable connection device
Ensemble de pièces destiné à la fabrication d'un dispositif de raccordement à fibre optique

(30) Priorität: 22.11.2013 DE 102013019645
(43) Veröffentlichungstag der Anmeldung: 27.05.2015
(73) Patentinhaber: Dätwyler Cabling Solutions AG, 6460 Altdorf (CH)
(72) Erfinder: Arnold, Martin, 5630 Muri (CH)
(74) Vertreter: Samson & Partner Patentanwälte mbB

(56) Entgegenhaltungen:
- WO-A2-2009/120280
- US-A1- 2009 324 189
- US-A1- 2011 211 799

## Beschreibung

### Gebiet der Erfindung

Die Erfindung betrifft einen Teilesatz zum Herstellen einer Lichtwellenleiter-Anschlussvorrichtung sowie ein Verfahren zur Herstellung einer ersten und zweiten Konfiguration der Lichtwellenleiter-Anschlussvorrichtung aus dem Teilesatz.

### Hintergrund der Erfindung

Bei Datennetzverkabelungen finden Lichtwellenleiter (abgekürzt LWL) Anwendung, wobei Datennetzverkabelungen abschnittsweise aus jeweils miteinander verbundenen, separaten LWL-Kabeln bestehen können. Beispielsweise lässt sich ein (räumlicher) Abschnitt einer Datennetzverkabelung zwischen zwei Gebäuden mit einem ersten LWL-Kabel realisieren, das für raue Umwelteinflüsse ausgelegt ist. Hingegen ist die Datennetzverkabelung innerhalb von Gebäuden mit weniger mechanisch robusten, günstigeren LWL-Kabeln fortgesetzt. Schließlich werden Endgeräte, wie z.B. Computer, über möglichst flexible LWL-Kabel an die Datennetzverkabelung angebunden.

LWL-Kabel lassen sich über Steckverbindungen oder Spleißverbindungen der LWL miteinander mechanisch und signalübertragungsmäßig verbinden. Dementsprechend sind manche LWL-Kabel mit endseitigen Steckverbindern ausgerüstet, andere LWL-Kabel hingegen nicht. Zwei LWL-Kabel lassen sich also unmittelbar miteinander verbinden, z.B. mittels einer Kupplung oder mittels einer Spleißverbindung. Außerdem sind LWL-Anschlussvorrichtungen bekannt, welche als eine separate bauliche Einheit zum Verbinden von zwei oder mehr LWL-Kabeln vorgesehen sind. Um sowohl LWL-Kabel mit als auch ohne endseitigen Steckverbindern gerecht zu werden, gibt es unterschiedliche bauliche Ausführungen von LWL-Anschlussvorrichtungen.

Insgesamt sind Datennetzverkabelungen hinsichtlich der Bauformen sowohl der LWL-Kabel als auch der Verbindungen zumeist heterogen ausgerüstet. Dies erfordert unterschiedliche Bauformen von LWL-Anschlussvorrichtungen und einen dementsprechenden Aufwand für deren Herstellung. Eine Bauform ist in der WO 2009/120280 A2 beschrieben. Eine Bauform nach der Präambel des Anspruchs 1 ist in der US 2011/0211799 A1 beschrieben.

Der Erfindung liegt die Aufgabe zugrunde, einen Teilesatz zum Herstellen einer Lichtwellenleiter-Anschlassvorrichtung sowie ein Verfahren zur Herstellung von Lichtwellenleiter-Anschlussvorrichtungen bereitzustellen, der bzw. das solche Nachteile vermeidet oder zumindest reduziert.

### Kurzfassung der Erfindung

Die Erfindung ist durch die unabhängigen Ansprüche definiert.

Ein Aspekt betrifft einen Teilesatz zum Herstellen einer Lichtwellenleiter-Anschlussvorrichtung. Der Teilesatz weist wenigstens eine Spleißkassette für ein Lichtwellenleiter-Kabel, wenigstens eine erste Lichtwellenleiter-Kupplung, wenigstens eine zweite Lichtwellenleiter-Kupplung, wenigstens ein Lichtwellenleiter-Verbindungsstück und ein Gehäusegrundelement auf. Hierbei ist das Gehäusegrundelement für die Befestigung der wenigstens einen ersten Lichtwellenleiter-Kupplung ausgerüstet.

Für eine erste Konfiguration der Lichtwellenleiter-Anschlussvorrichtung sind das Gehäusegrundelement und die Spleißkassette für die Befestigung der Spleißkassette in dem Gehäusegrundelement ausgerüstet. Für eine zweite, spleißkassettenlose Konfiguration der Lichtwellenleiter-Anschlussvorrichtung ist das Gehäusegrundelement für die Befestigung der wenigstens einen zweiten Lichtwellenleiter-Kupplung ausgerüstet.

Ein anderer Aspekt betrifft ein Verfahren zur Herstellung einer ersten und/oder einer zweiten Konfiguration einer Lichtwellenleiter-Anschlussvorrichtung aus einem solchen Teilesatz, wobei für die erste Konfiguration der Lichtwellenleiter-Anschlussvorrichtung die Spleißkassette in dem Gehäusegrundelement montiert wird und die wenigstens eine erste Lichtwellenleiter-Kupplung an dem Gehäusegrundelement befestigt wird. Für die zweite, spleißkassettenlose Konfiguration der Lichtwellenleiter-Anschlussvorrichtung werden die wenigstens eine erste Lichtwellenleiter-Kupplung und die wenigstens eine zweite Lichtwellenleiter-Kupplung an dem Gehäusegrundelement befestigt und wenigstens ein Lichtwellenleiter-Verbindungsstück an einer ersten und an einer zweiten Lichtwellenleiter-Kupplung angeschlossen.

Ein weiterer Aspekt betrifft die Verwendung eines solchen Teilesatzes zur Herstellung einer Lichtwellenleiter-Anschlussvorrichtung nach einem solchen (Herstellungs-) Verfahren.

### Allgemeine Beschreibung

Die nachfolgende Beschreibung ist gleichermaßen auf den Teilesatz zum Herstellen der LWL-Anschlussvorrichtung, auf das Verfahren zur Herstellung der LWL-Anschlussvorrichtung mit dem Teilesatz und auf die Verwendung des Teilesatzes zur Herstellung der LWL-Anschlussvorrichtung zu verstehen.

Die LWL-Anschlussvorrichtung erlaubt das Anschließen von wenigstens zwei LWL-Kabeln, wobei sich diese Kabel hierdurch (auch) signalübertragungsmäßig miteinander verbinden lassen. Wie zuvor genannt, können LWL-Kabel beispielsweise einseitig oder beidseitig mit Steckverbindern ausgerüstet sein. Solche LWL-Kabel werden als vorkonfektionierte LWL-Kabel bezeichnet. Dementsprechend sind hierfür unterschiedliche bauliche Varianten von LWL-Anschlussvorrichtungen vorgesehen. Diese Varianten werden herkömmlich aus baulich unterschiedlichen Varianten von Teilen hergestellt, insbesondere aus baulich unterschiedlichen Varianten eines Gehäusegrundelements.

Hingegen ermöglicht es der Teilesatz, eine LWL-Anschlussvorrichtung mit einer ersten Konfiguration und/oder mit einer zweiten Konfiguration herzustellen. Die erste Konfiguration ist zum Anschließen (und signalübertragungsmäßigen Verbinden) von wenigstens einem steckverbinderlosen LWL-Kabel und wenigstens einem vorkonfektionierten LWL-Kabel vorgesehen. Hingegen ist die zweite Konfiguration zum Anschließen (und gegenseitigen signalübertragungsmäßigen Verbinden) von wenigstens einem vorkonfektionierten LWL-Kabel und wenigstens einem weiteren vorkonfektionierten LWL-Kabel vorgesehen.

Bei manchen Ausgestaltungen hat eine einzige LWL-Anschlussvorrichtung also gleichzeitig die erste und die zweite Konfigurationen. Mit einer solchen LWL-Anschlussvorrichtung lassen sich gleichermaßen wenigstens zwei vorkonfektionierte LWL-Kabel oder auch ein nichtvorkonfektioniertes mit einem vorkonfektionierten LWL-Kabel verbinden. Eine solche LWL-Anschlussvorrichtung ist also zum Verbinden zweier hinsichtlich ihrer Vorkonfektioniertheit unterschiedlicher Paare von LWL-Kabeln ausgerüstet. Eine solche LWL-Anschlussvorrichtung ist universell einsetzbar beim Aufbau, sprich der Verkabelung, von Datennetzverkabelung.

Hingegen sind bei manchen bevorzugten Ausgestaltungen die erste Konfigurationen und die zweite Konfiguration echte Alternativen, d.h. der Teilesatz erlaubt entweder die Herstellung einer LWL-Anschlussvorrichtung mit der ersten oder mit der zweiten Konfiguration. Dementsprechend wird bei manchen bevorzugten Ausgestaltungen des Verfahrens zur Herstellung der LWL-Anschlussvorrichtung letztlich entweder die erste oder die zweite Konfiguration hergestellt. Hierzu ist beispielsweise der Teilesatz, insbesondere das Gehäusegrundelement so ausgerüstet, dass sich, falls die Spleißkassette an dem Gehäusegrundelement montiert ist, nicht gleichzeitig (bzw. zusätzlich hierzu) die wenigstens eine zweite LWL-Kupplung an dem Gehäusegrundelement befestigen lässt. Zusätzlich oder auch alternativ kann der Teilesatz, insbesondere das Gehäusegrundelement auch so ausgerüstet sein, dass sich, falls die wenigstens eine zweite LWL-Kupplung am Gehäusegrundelement montiert ist, nicht gleichzeitig (d.h. zusätzlich) die Spleißkassette montieren lässt. Hierfür sind bei manchen Ausgestaltungen die zweiten LWL-Kupplungen bzw. die Spleißkassette körperlich so ausgebildet, dass sie sich bei der Montage an dem Gehäusegrundelement gegenseitig blockieren, beispielsweise durch geeignete Vorsprünge, Nasen, Nuten oder schlicht ihre Baugröße. Sie lassen sich dann nicht gleichzeitig montieren.

Zwecks besserer Veranschaulichung wird nachfolgend auf eine Rückseite und auf eine Frontseite der LWL-Anschlussvorrichtung Bezug genommen. Die LWL-Anschlussvorrichtung kann allerdings in beliebigen räumlichen Ausrichtungen betrieben werden. Diese Sprechweise dient, sofern nicht anderslautend genannt, also lediglich der Veranschaulichung und einer sprachlichen Vereinfachung. Insbesondere sei hierbei nicht eine Richtung des Datenflusses im Netzwerk oder eine räumliche Ausrichtung der LWL-Anschlussvorrichtung als solches festgelegt. Gleiches gilt für Begriffe wie Boden, Deckel oder Seitenwand, die hier lediglich eine relative Lage der jeweiligen Gehäuseelemente bezeichnen (so bezeichnen Front- und Rückwand, Deckel und Boden sowie Seitenwände nachfolgend jeweils gegenüberliegende Gehäusewandelemente).

Als weitere darstellungsmäßige Vereinfachung sind die nachfolgenden Erläuterungen teils auf "ein" LWL-Kabel, "ein" LWL-Verbindungsstück und "eine" erste bzw. "eine" zweite LWL-Kupplung bezogen formuliert. Sofern nicht anderslautend genannt, sind diese Erläuterungen allerdings auch auf Ausgestaltungen mit mehreren LWL-Kabeln, LWL-Verbindungsstücken und/oder erste bzw. zweite LWL-Kupplungen bezogen zu verstehen.

In dieser Sprechweise lassen sich also mit der LWL-Anschlussvorrichtung sowohl mit der ersten als auch mit der zweiten Konfiguration jeweils (wenigstens) zwei LWL-Kabel miteinander verbinden. Wie zuvor genannt unterscheiden sich die beiden Konfigurationen der LWL-Anschlussvorrichtung also (unter anderem) dadurch: Die ersten Konfiguration ist (vorzugsweise rückseitig) zum Anschließen eines nicht-vorkonfektionierten, also steckverbinderlosen LWL-Kabels vorgesehen. Hingegen ist die zweite Konfiguration (vorzugsweise rückseitig) zum Anschließen eines vorkonfektionierte LWL-Kabels vorgesehen, also zum Anschließen eines LWL-Kabels mit einem an dessen Ende montierten Steckverbinder. Hingegen sind (vorzugsweise frontseitig) beide Konfigurationen der LWL-Anschlussvorrichtung gleichermaßen zum Anschließen (wenigstens) eines vorkonfektionierten LWL-Kabels mittels der (wenigstens einen) ersten LWL-Kupplung ausgerüstet. Die LWL-Anschlussvorrichtung lässt sich daher als Zwischen- oder Verbindungsstück oder als Knoten bei einer Datennetzverkabelung einsetzen, wobei sie unterschiedlich vorkonfektionierte LWL-Kabel bzw. konfektionierte und nichtvorkonfektionierte LWL-Kabel verbindet.

Hierzu sind in dem Teilesatz zumindest enthalten: wenigstens eine Spleißkassette, wenigstens eine erste LWL-Kupplung, wenigstens eine zweite LWL-Kupplung, wenigstens ein Lichtwellenleiter-Verbindungsstück und ein Gehäusegrundelement.

Für die erste Konfiguration wird die Spleißkassette in dem Gehäusegrundelement befestigt. Hierdurch lässt sich ein (steckverbinderloses) Ende eines LWL-Kabels innerhalb der LWL-Anschlussvorrichtung spleißen. So lassen sich (einzelne) Lichtwellenleiter (innerhalb des Gehäusegrundelements) jeweils an der bzw. den ersten (vorzugsweise frontseitigen) LWL-Kupplung(en) anschließen.

Für die zweite Konfiguration wird hingegen die zweite LWL-Kupplung (vorzugsweise rückseitig) an dem Gehäusegrundelement befestigt. Hierdurch lässt sich ein mit einem Steckverbinder vorkonfektioniertes Ende eines LWL-Kabels an die LWL-Anschlussvorrichtung - genauer an die zweite LWL-Kupplung - anschließen. Außerdem werden bei der zweiten Konfiguration die erste und die zweite LWL-Kupplung gehäusegrundelementintem mittels des (wenigstens einen) LWL-Verbindungsstücks miteinander verbunden, sodass sich Signale zwischen diesen LWL-Kupplungen übertragen lassen.

Bei manchen Ausgestaltungen, bei denen sowohl die LWL-Anschlussvorrichtung mit der ersten und der zweiten Konfiguration ausgerüstet ist, teilen sich - bildlich gesprochen - beide Konfigurationen die (vorzugsweise frontseitig angeordneten) ersten LWL-Kupplungen. Diese Ausgestaltungen besitzen also dieselbe Gesamtzahl von ersten LWL-Kupplungen, wie andere Ausgestaltungen, bei denen entweder nur die erste oder nur die zweite Konfiguration realisiert ist. Übrigens sind hierbei manche der ersten LWL-Kupplungen über LWL-Verbindungsstücke mit zweiten LWL-Kupplungen innerhalb des Gehäuses verbunden. Manche anderen LWL-Kupplungen sind zum Anschließen von Spleißen vorgesehen.

Bei manchen Ausgestaltungen ist das LWL-Verbindungsstück ein separates Bauteil. Vorzugsweise sind die LWL-Verbindungsstücke vorkonfektioniert. Beispielsweise hat das LWL-Verbindungsstück einen MTP-Stecker, aus dem mehrere, z.B. zwölf, Lichtwellenleiter austreten. An den (dem MTP-Stecker) gegenüberliegenden Enden der Lichtwellenleiter ist jeweils ein LC-Stecker angeordnet. Bei anderen Ausgestaltungen ist das LWL-Verbindungsstück hingegen baulich einteilig mit einer ersten LWL-Kupplung oder - bei weiteren Ausgestaltungen - mit einer zweiten LWL-Kupplung. Der Begriff "einteilig" ist so zu verstehen, dass es sich um eine bauliche Einheit handelt, die nicht aus Einzelteilen montiert sondern einstückig hergestellt ist.

Im Übrigen lässt sich das LWL-Verbindungsstück (abschnittsweise) in dem LWL-Kabeldepot anordnen. Dadurch kann optional die Länge des LWL-Verbindungsstücks im Wesentlichen größer als der Abstand zwischen der ersten und zweiten LWL-Kupplung sein, sodass sich ein Vorrat hinsichtlich der Leitungslänge des LWL-Verbindungsstücks im Gehäuse der LWL-Anschlussvorrichtung vorhalten lässt.

Insgesamt lassen sich also mit dem Teilesatz unterschiedliche Konfigurationen der LWL-Anschlussvorrichtung auf Basis eines gemeinsamen, d.h. baugleichen Gehäusegrundelements herstellen.

Bei manchen Ausgestaltungen ist das Gehäusegrundelement mit einem in dem Gehäusegrundelement angeordneten Lichtwellenleiter-Kabeldepot ausgerüstet. Hierbei lässt sich das LWL-Verbindungsstück durch das Kabeldepot sicher, insbesondere vibrationsgesichert, zugentlastet und/oder unter Einhaltung eines gewissen Mindestkrümmungsradius, zwischen erster und zweiter LWL-Kupplung verlegen, sodass beispielsweise die Gefahr einer Schädigung der LWL reduziert wird. Bei einigen Ausgestaltungen ist das LWL-Kabeldepot mit wenigstens einer Halteeinrichtung für ein oder mehrere LWL-Kabel ausgerüstet, wie z.B. einem Finger, einem Haken, einer Klemme oder einer Öse.

Bei manchen Ausgestaltungen ist das LWL-Kabeldepot zur Befestigung an gegenüberliegenden Seitenwänden des Gehäusegrundelements ausgerüstet, beispielsweise durch Rastnasen oder mittels einer Nut oder Schiene der Seitenwände, in die sich das Kabeldepot einschieben lässt. Bei manchen Ausgestaltungen ist das LWL-Kabeldepot baulich einteilig mit einem Boden oder Deckel des Gehäusegrundelements. Bei anderen Ausgestaltungen ist das LWL-Kabeldepot baulich einteilig mit einem (separaten) Boden oder (separaten) Deckel für das Gehäusegrundelement, also nicht einteilig mit dem Gehäusegrundelement selbst. Hierdurch lässt sich die Zahl der Teile des Teilesatzes reduzieren. Hingegen ist bei manchen anderen Ausgestaltungen das Kabeldepot separat sowohl vom Gehäusegrundelement als auch von weiteren Gehäusewandelementen, wie z.B. Boden, Deckel, Rückwand oder Frontwand.

Bei manchen Ausgestaltungen weist der Teilesatz zudem wenigstens eine LWL-Kabeldurchführung auf. Bei einigen dieser Ausgestaltungen ist für die erste Konfiguration der LWL-Anschlussvorrichtung das Gehäusegrundelement für die Befestigung der LWL-Kabeldurchführung an einer Wand des Gehäusegrundelements ausgerüstet. Außerdem sind bei einigen Ausgestaltungen die LWL-Kabeldurchführung und die zweiten LWL-Kupplungen nicht gleichzeitig montierbar, sodass die (spleißkassettenlose) zweite Konfiguration LWLdurchführungslos vorgesehen ist. Die LWL-Kabeldurchführung stellt beispielsweise einen Schutz gegen Abknicken und/oder Scheuern eines LWL-Kabels an einer Gehäusewand dar. Bei manchen Ausgestaltungen bildet zusätzlich oder alternativ die LWL-Kabeldurchführung eine Zugentlastung für das LWL-Kabel, indem es das LWL-Kabel gegen Verschieben entlang der Leitungsrichtung des LWL-Kabels fixiert. Bei manchen Ausgestaltungen ist die LWL-Kabeldurchführung im Wesentlichen eine Kabelmuffe. Bei manchen Ausgestaltungen umfasst die LWL-Kabeldurchführung eine Adapterplatte und eine Kabelmuffe, wobei die Adapterplatter zum Befestigen in einer Öffnung des Gehäuses eingerichtet ist und außerdem zum Befestigen der Kabelmuffe (an der Adapterplatte). Hierdurch lässt sich die Kabelmuffe an einer Gehäuseöffnung montieren, die im Wesentlichen größer als die Kabelmuffe ist, z.B. eine Öffnung die zum Einrasten einer oder mehrerer LWL-Kupplungen dimensioniert ist.

Bei manchen Ausgestaltungen ist das Gehäusegrundelement mit (wenigstens) einer derart eingerichteten Öffnung versehen, dass sich in der Öffnung die LWL-Kabeldurchführung und alternativ die zweite LWL-Kupplung montieren lässt. Je nach Konfiguration kann in einer solchen Öffnung also entweder eine LWL-Kabeldurchführung oder wenigstens eine zweite LWL-Kupplung montiert werden. Für Ausgestaltungen mit erster und zweiter Konfiguration sind wenigstens zwei solche Öffnungen vorgesehen, wobei in wenigstens einer Öffnungen jeweils eine LWL-Kabeldurchführung und in wenigstens einer weiteren dieser Öffnungen jeweils wenigstens eine LWL-Kupplung montiert wird.

Bei manchen Ausgestaltungen wird die Spleißkassette in der Art eines Stapels auf dem Kabeldepot aufliegend montiert. Hierdurch sind das Kabeldepot und die Spleißkassette gleichzeitig für LWL-Kabel nutzbar. Bei manchen Ausgestaltungen wird die Spleißkassette unmittelbar an dem Kabeldepot befestigt. Dementsprechend sind Spleißkassette und Kabeldepot hierfür ausgerüstet. Bei einigen dieser Ausgestaltungen lässt sich die Spleißkassette werkzeuglos befestigen oder auch wieder lösen, beispielsweise indem das Kabeldepot und/oder die Spleißkassette mit Rastnasen ausgerüstet sind, die in die Spleißkassette bzw. das Kabeldepot eingreifen.

Bei manchen Ausgestaltungen weist der Teilesatz zudem (wenigstens) eine Spleißkassetten-Abdeckung auf. Hierbei lassen sich bei einigen dieser Ausgestaltungen die Spleißkassetten-Abdeckung und die Spleißkassette unmittelbar aneinander befestigen, beispielsweise werkzeuglos mittels Rastnasen der Spleißkassetten-Abdeckung und/oder der Spleißkassette. Im Übrigen ist bei diesen Ausgestaltungen das Gehäusegrundelement eingerichtet, die wenigstens eine Spleißkassette mit der an ihr befestigten Spleißkassetten-Abdeckung zu umschließen. Somit wird ein in die Spleißkassette eingelegtes LWL-Kabel (auch dann) sicher in der Spleißkassette zurückgehalten, falls beispielsweise ein Deckel des Gehäusegrundelements geöffnet wird und/oder die Spleißkassette (mit eingelegtem LWL-Kabel) vom Gehäusegrundelement gelöst wird, etwa um eine Spleißung durchzuführen.

Bei manchen Ausgestaltungen ist das Gehäusegrundelement nach Art eines teilweise offenen Rahmens gebildet, um einen einfachen Zugang in das Innere zu ermöglichen. Bei einigen dieser Ausgestaltungen ist das Gehäusegrundelement für wenigstens eine lösbare Wand ausgerüstet, beispielsweise für eine Frontwand, eine Rückwand, einen Deckel und/oder einen Boden. Hierbei ist bei manchen Ausgestaltungen nur eine einzige Wand lösbar, wodurch sich die Gefahr eines fehlerhaften Eingriffs reduziert. Die übrigen Wände sind dann, vorzugweise einteiliger Bestandteil des Gehäusegrundelements. Bei anderen Ausgestaltungen sind zwei oder mehr Wände lösbar, wodurch sich ein einfacherer Eingriff in das Gehäusegrundelement erzielen lässt, etwa um die LWL-Verbindungsstücke anzuschließen oder um ein LWL-Kabel zu spleißen.

Insgesamt wird ein Gehäuse der LWL-Anschlussvorrichtung im Wesentlichen aus dem Gehäusegrundelement sowie weiteren, an dem Gehäusegrundelement (vorzugsweise wieder lösbar) montierbaren Gehäusewandelementen hergestellt.

Bei manchen Ausgestaltungen lässt sich das Gehäuse werkzeuglos (händisch) öffnen oder auch wiederverschließen, etwa indem (wenigstens) ein Gehäusewandelement, z.B. die Frontwand, die Rückwand und/oder der Deckel, an dem Gehäusegrundelement werkzeuglos befestigbar oder auch von diesem wieder lösbar ist. Dies ermöglicht einen raschen Zugriff auf LWL im Innern des Gehäusegrundelements. Bei manchen anderen Ausgestaltungen lässt sich das Gehäusegrundelement mittels eines üblichen Werkzeugs, etwa einem Kreuzschlitz- oder Schlitzschraubendreher, öffnen oder auch wiederverschließen.

Bei manchen Ausgestaltungen ist das Gehäusegrundelement oder auch das Gehäuse im Wesentlichen quaderförmig.

Bei manchen Ausgestaltungen sind die Frontwand, die Rückwand, der Boden, der Deckel, die Seitenwände, das Gehäusegrundelement und/oder das Gehäuse insgesamt im Wesentlichen aus Kunststoff, z.B. aus ABS-PC (Acrylnitril-Butadien-Styrol Polycarbonat) oder glasfaserverstärktem Kunststoff, oder aus Metall, z.B. Stahl(blech) oder Aluminium, gefertigt. Bei einigen Ausgestaltungen ist die Frontwand aus Aluminium und das Gehäusegrundelement sowie die übrigen Gehäusewandelemente im Wesentlichen aus Kunststoff hergestellt. Somit ist die dem Benutzer zugewandte Frontwand robuster und höherwertig ausgerüstet.

Bei manchen Ausgestaltungen ist die Frontwand mit einer Befestigungseinrichtung versehen, um die LWL-Anschlussvorrichtung z.B. an einem Rahmen, in einem Regal, an einer Kabelführungsschiene oder Ähnlichem zu montieren. Hierbei ist vorzugsweise die Frontwand so dimensioniert, dass sie die gesamte Gewichtskraft der LWL-Anschlussvorrichtung (mechanisch) übertragen kann. Die LWL-Anschlussvorrichtung lässt sich somit alleine an der Frontwand an einem externen Halter befestigen. Dies vereinfacht beispielsweise die Installation der LWL-Anschlussvorrichtung in einer Datennetzverkabelung.

Bei manchen Ausgestaltungen ist das Gehäusegrundelement, vorzugsweise das Gehäuse insgesamt, hinsichtlich seiner Höhe, Breite und/oder Länge für die Montage in einem 19-Inch-Rack (z.B. gemäß EIA 310-D, IEC 60297 und DIN 41494 SC48D) dimensioniert, sodass sich die LWL-Anschlussvorrichtung z.B. flexibel in bestehende Datennetzverkabelungen integrieren lässt.

Bei manchen Ausgestaltungen sind die ersten LWL-Kupplungen frontseitig, z.B. an einer lösbaren Frontwand, angeordnet. Dies ermöglicht dem Benutzer, LWL-Kabel, die beispielsweise zu Endgeräten hin führen, bequem zugänglich frontseitig anzuschließen. Bei manchen Ausgestaltungen sind die ersten und die zweiten LWL-Kupplungen auf gegenüberliegenden Seiten des Gehäusegrundelements, z.B. frontseitig und rückseitig, angeordnet. So lässt sich beispielsweise leichter feststellen, ob ein an die LWL-Anschlussvorrichtung angeschlossenes LWL-Kabel zu einem Endgerät hin oder zu der übrigen Datennetzverkabelung hin führt, beispielsweise falls die LWL-Anschlussvorrichtung in einem dicht gepackten Installationsschrank oder in einem Regal, wie z.B. einem 19-Inch-Rack, platziert ist.

Bei manchen Ausgestaltungen hat die Frontwand wenigstens eine Öffnung, die für die Montage wenigstens einer ersten Lichtwellenleiter-Kupplung vorgesehen ist. Hierbei lässt sich also wenigstens eine (vorzugsweise erste) LWL-Kupplung in jeweils einer Öffnung angeordnet montieren, beispielsweise in dieser einrasten. Bei einigen dieser Ausgestaltungen können also beispielsweise auch zwei oder vier LWL-Kupplungen in einer Öffnung gemeinsam montiert werden, bei anderen Ausgestaltungen hingegen nur eine einzelne LWL-Kupplung pro Öffnung.

Ähnlich der Gestalt einer gestrichelten Linie, sind bei manchen Ausgestaltungen mehrere (kürzere) Reihen solcher Öffnungen zueinander beabstandet in einer (längeren) Reihe angeordnet - also eine Reihe von Reihen von Öffnungen. Ähnlich der Gestalt einer gestrichelten Doppel-Linie sind sind bei manchen Ausgestaltung entlang einer (längeren) Reihe jeweils zwei (oder optional mehrere) parallele (kürzere) Reihen solcher Öffnungen angeordnet. Hierdurch lassen sich die Lichtwellenleiter-Kupplungen gruppiert an der Frontwand anordnen, beispielsweise in Gruppen definiert durch je 1x2, 1x4, 1x6, 1x8, 1x12, 2x2, 2x3, 2x4, 2x6, 2x8 oder 2x12 Öffnungen, wobei diese Notation am Beispiel "2x4" veranschaulicht als zwei Reihen (d.h. eine Doppelreihe) aus jeweils vier Öffnungen zu verstehen ist. Bei manchen Ausgestaltungen sind also auch mehrere solcher Gruppen zueinander beabstandet in einer (langen) Reihe angeordnet, wodurch sich eine übersichtlichere Strukturierung der Öffnungen bzw. der darin angeordneten LWL-Kupplungen für den Benutzer erzielen lässt oder sich auch ein Zugriff auf die LWL-Kupplungen vereinfachen lässt. Im Übrigen sind bei manchen Ausgestaltungen solche Öffnungen auch an anderen Wänden des Gehäuses auf eine dieser Weisen angeordnet.

Bei manchen Ausgestaltungen ist frontseitig auf der Frontwand (vorzugsweise neben einer solchen Öffnung) wenigstens eine Halterung zum Aufnehmen wenigstens eines Etiketts angeordnet. Hierdurch lässt sich der oder den in der Öffnung montierten LWL-Kupplungen seitens des Benutzers das (wenigstens eine) Etikett, bzw. eine auf dem Etikett angebrachte Beschriftung oder Farbcodierung zuordnen. Hierbei ist bei manchen Ausgestaltungen die Halterung baulich einteilig mit der Frontwand ausgeführt. Bei manchen Ausgestaltungen ist die Halterung mit einer Aufnahme für das Etikett ausgebildet, z.B. einer Vertiefung, Ausnehmung oder Nut. Als Etikett ist beispielsweise ein Papierstreifen oder eine Folie zu verstehen, welche z.B. durch den Benutzer beschriftbar ist.

Bei manchen Ausgestaltungen ist die Halterung mit einer Rückhalteeinrichtung für das Etikett ausgerüstet, wobei vorzugsweise die Rückhalteeinrichtung einteilig mit der Frontwand ausgebildet ist, sodass kein weiteres, separates Bauteil erforderlich ist, um das Etikett zu hindern, sich selbstständig von der Frontwand bzw. der Halterung abzufallen oder herauszurutschen. Beispielsweise hat die Rückhalteeinrichtung eine Schiene, eine Hinterschneidung, eine Rastnase oder eine Öse, durch die sich das Etikett fädeln lässt, um das Etikett zu halten. Bei manchen Ausgestaltungen ist die Aufnahme mit wenigstens einem Anschlag für das Etikett ausgerüstet, sodass sich das (wenigstens eine) Etikett (an gewissen Stellen) positionieren lässt oder auch am herausrutschen aus der Aufnahme hindern lässt. Dies erlaubt dem Benutzer, ein Etikett in die Aufnahme einzuführen und auch das Etikett wieder zu entnehmen, ohne dass hierzu ein Werkzeug und/oder die Montage bzw. Demontage von zusätzlichen Bauteilen zum Halten des Etiketts nötig ist.

Bei manchen Ausgestaltungen ist die Aufnahme der Halterung über einen Einführschlitz mit einer Außenseite der Frontwand verbunden, durch den sich das Etikett hindurch in die Aufnahme einschieben lässt. Vorzugsweise ist der Einführschlitz an einer Stirnfläche der Frontwand angeordnet. Hierdurch ist er beispielsweise von der Frontseite her gesehen geschützt angeordnet. Bei manchen Ausgestaltungen ist die Frontwand (hinsichtlich ihrer Dicke) zu wenigstens einer Seite hin zu ihrem Rand hin stufenartig verjüngt. Hierbei lässt sich der Einführschlitz stirnseitig an einer Stufe anordnen, und zwar beabstandet zum Rand des Gehäusewandelements.

Bei manchen Ausgestaltungen erstreckt sich die Halterung für das Etikett über die gesamte Länge einer Reihe von Öffnungen oder auch über die gesamte Länge mehrerer Reihen von Öffnungen, insbesondere über die Länge der Anordnung aller Öffnungen. Bei manchen anderen Ausgestaltungen entspricht die Länge der Halterung im Wesentlichen einer Länge einer einzelnen Öffnung. Bei manchen Ausgestaltungen ist beidseitig einer Öffnung oder einer Reihe von Öffnungen wenigstens eine Halterung angeordnet.

Bei manchen Ausgestaltungen sind die wenigstens eine erste LWL-Kupplung und die wenigstens eine zweite LWL-Kupplung baulich unterschiedliche, also mechanisch inkompatible LWL-Kupplungstypen. Somit erlaubt es die LWL-Anschlussvorrichtung, LWL-Kabel die mit baulich unterschiedlichen Steckverbindern vorkonfektioniert sind, miteinander signalübertragungsmäßig zu verbinden. Bei manchen Ausgestaltungen sind als die wenigstens eine erste LWL-Kupplung LC-, LCD- und/oder LCQ- Kupplungen vorgesehen. Bei manchen Ausgestaltungen ist als die wenigstens eine zweite LWL-Kupplung eine MTP-Kupplung vorgesehen. Die erste und oder zweite LWL-Kupplung können auch einem anderen, bekannten Steckverbindertyp für LWL entsprechen, beispielsweise auch eine E2000-Kupplung. Bei manchen Ausgestaltungen weist der Teilesatz sechs, zwölf oder 24 LC-Kupplungen als erste LWL-Kupplungen auf. Bei manchen Ausgestaltungen weist der Teilesatz eine, zwei, drei oder vier MTP-Kupplungen als zweite LWL-Kupplungen auf.

### Erläuterung der Zeichnung

Die angefügte Zeichnung veranschaulicht Ausführungsformen der verschiedenen Aspekte der Erfindung. In der Zeichnung zeigen jeweils als schematische Darstellung:
Fig. 1 einen Teilesatz zum Herstellen einer Lichtwellenleiter-Anschlussvorrichtung,
Fig. 2 eine Frontansicht der Lichtwellenleiter-Anschlussvorrichtung,
Fig. 3 ein Gehäusegrundelement der Lichtwellenleiter-Anschlussvorrichtung,
Fig. 4a und 4b eine Spleißkassette und eine Spleißkassetten-Abdeckung und
Fig. 5a und 5b jeweils ein Beispiel einer Frontwand für das Gehäusegrundelement in rück- und frontseitiger Ansicht.

### Beschreibung von Ausführungsformen anhand der Zeichnung

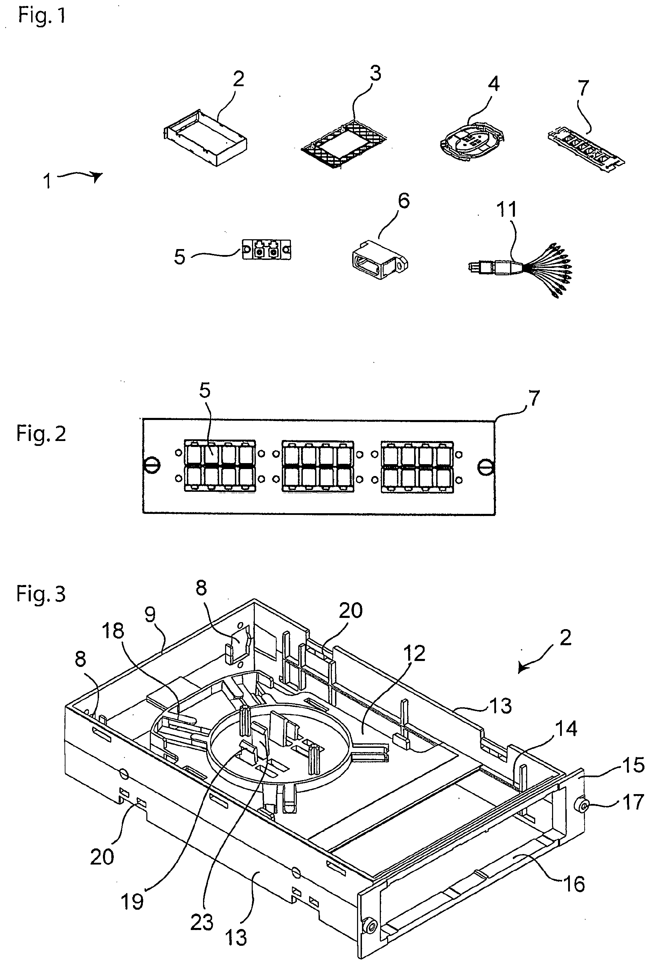

Das in Figur 1 symbolhaft veranschaulichte und anzahlmäßig reduziert dargestellte Ausführungsbeispiel eines Teilesatzes 1 zum Herstellen einer LWL-Anschlussvorrichtung umfasst ein Gehäusegrundelement 2, einen Deckel 3 für das Gehäusegrundelement 2, eine Spleißkassette 4, 24 LC-Kupplungen 5, vier MTP-Kupplungen 6, zwei LWL-Verbindungsstücke 11 und eine Frontwand 7. Dieser Teilesatz 1 erlaubt es, eine LWL-Anschlussvorrichtung mit einer ersten Konfiguration und/oder auch mit einer zweiten Konfiguration der LWL-Anschlussvorrichtung herzustellen. Andere Ausführungsbeispiele unterscheiden sich dadurch, dass der Teilesatz eine, zwei, drei oder mehr als vier MTP-Kupplungen aufweist. Manche Ausführungsbeispiele unterscheiden sich dadurch, dass der Teilesatz zwei, vier, sechs, acht, zwölf oder 16 LC-Kupplungen aufweist.

Bei einem Ausführungsbeispiel eines Verfahrens zum Herstellen einer LWL-Anschlussvorrichtung aus diesem Teilesatz 1 wird für die erste Konfiguration die Spleißkassette 4 in dem Gehäusegrundelement 2 befestigt. Außerdem werden die 24 LC-Kupplungen 5 in insgesamt drei Öffnungen der Frontwand 7 befestigt, wobei jeweils acht LC-Kupplungen 5 gemeinsam in eine der drei Öffnung der Frontwand 7 eingerastet werden. Die LC-Kupplungen 5 sind somit als drei Achter-Gruppen frontseitig auf der Frontwand 7 angeordnet. Andere Ausführungsbeispiele unterscheiden sich dadurch, dass die Frontwand mit einer, zwei, vier, acht, zwölf oder 16 Öffnungen ausgerüstet ist, die zum Einsetzen von jeweils einer, zwei oder vier LWL-Kupplungen dimensioniert sind.

Die Frontwand 7 und auch der Deckel 3 werden an dem Gehäusegrundelement 2 werkzeuglos mittels Rastnasen befestigt. Bedarfsweise lässt sich die Frontwand 7 und/oder der Deckel 3 auch wieder lösen: In die so hergestellte erste Konfiguration der LWL-Anschlussvorrichtung lässt sich ein LWL-Kabel in das Gehäusegrundelement 2 einführen und dort in der Spleißkassette 4 spleißen. Die einzelnen Spleiße lassen sich dann an die in der Frontwand 7 montierten LC-Kupplungen 5 anschließen. Somit erlaubt die LWL-Anschlussvorrichtung eine signalmäßige Verbindung zwischen dem rückseitig eingeführten LWL-Kabel und den frontseitigen LC-Kupplungen 5.

Für die zweite Konfiguration der LWL-Anschlussvorrichtung werden bei diesem Ausführungsbeispiel (anstatt der Spleißkassette 4) die MTP-Kupplungen 6 montiert, und zwar jeweils paarweise in die Öffnungen 8 an der Rückwand 9 des Gehäusegrundelements 2. Zudem werden (wie auch für die erste Konfiguration) die 24 LC-Kupplungen 5 in die drei Öffnungen der Frontwand 7 befestigt. Die rückseitigen MTP-Kupplungen 6 werden über die LWL-Verbindungsstücke 11 mit den frontseitigen LC-Kupplungen 5 verbunden, sodass die LWL-Anschlussvorrichtung eine signalmäßige Verbindung zwischen den rück- und frontseitigen Kupplungen 5, 6 herstellt. Schließlich werden die Frontwand 7 wie auch der Deckel 3 an dem Gehäusegrundelement 2 werkzeuglos mittels der Rastnasen befestigt. An die so hergestellte zweite Konfiguration der LWL-Anschlussvorrichtung lassen sich rückseitig an den MTP-Kupplungen 6 vorkonfektionierte, d.h. mit MTP-Steckverbindern ausgerüstete LWL-Kabel anschließen.

Frontseitig unterscheiden sich hierbei die erste und zweite Konfiguration nicht, wie in Figur 2 veranschaulicht. Frontseitig lassen sich gleichermaßen bei der ersten wie auch bei der zweiten Konfiguration der LWL-Anschlussvorrichtung jeweils an den LC-Kupplungen 5 LWL-Kabel anschließen, die mit LC-Steckverbindern vorkonfektioniert sind, beispielsweise um Endgeräte, wie z.B. Computer, an eine Datennetzverkabelung anzubinden. In diesem Fall erfolgt die Datennetzverkabelung von einem Endgerät aus gesehen über ein erstes LWL-Kabel hin zur LWL-Anschlussvorrichtung und von dieser aus weiter zur übrigen Datennetzverkabelung. Hierbei lassen sich zahlreiche Endgeräte gleichzeitig an der LWL-Anschlussvorrichtung anschließen - bei diesen Ausführungsbeispielen z.B. 12 Endgeräte über je zwei-adrige LWL-Kabel.

Bei den zuvor erläuterten Ausführungsbeispielen wird also für die zweite Konfiguration die Spleißkassette 4 nicht montiert. Hingegen werden für die erste Konfiguration die MTP-Kupplungen 6 sowie die LWL-Verbindungsstücke 11 nicht montiert. Die erste und zweite Konfiguration sind hierbei als echte Alternativen zu verstehen.

Im Unterschied hierzu wird bei manchen anderen Ausführungsbeispielen die LWL-Anschlussvorrichtung gleichzeitig mit der Spleißkassette 4, wenigstens einer MTP-Kupplung 6 und wenigstens einer LC-Kupplung 5 ausgerüstet. Solche Ausführungsbeispiele, sprich Teilesätze bzw. Herstellungsverfahren, sind dafür eingerichtet, dass die fertig hergestellte LWL-Anschlussvorrichtung dann gleichzeitig die erste und zweite Konfiguration aufweist.

Weitere Ausführungsbeispiele unterscheiden sich von den zuvor beschriebenen dadurch, dass das Gehäusegrundelement 2 mit einem LWL-Kabeldepot 12 ausgerüstet ist.

Weitere Ausführungsbeispiele unterscheiden sich von den zuvor beschriebenen dadurch, dass der Teilesatz (unter anderem) eine LWL-Kabeldurchführung umfasst. Die LWL-Kabeldurchführung wird in eine Öffnung 8 der Rückwand 9 des Gehäusegrundelements 2 montiert, wobei die LWL-Kabeldurchführung zum Einführen eines LWL-Kabels in das Gehäusegrundelement 2 vorgesehen ist.

Weitere Ausführungsbeispiele unterscheiden sich von den zuvor beschriebenen dadurch, dass das Gehäusegrundelement 2 nach der Art eines Rahmens und im Wesentlichen aus Kunststoff gefertigt. Wie in Figur 3 veranschaulicht sind bei diesem Gehäusegrundelement 2 in der Rückwand 9 zwei Öffnung 8 vorgesehen, in die sich wahlweise die LWL-Kabeldurchführung, die mit einer Kabelmuffe und einer Adapterplatter zum Anbringen der Kabelmuffe in der Öffnung ausgerüstet ist, oder (alternativ) ein oder zwei MTP-Kupplungen 6 montieren lassen. Außerdem ist das Gehäusegrundelement 2 mit einem LWL-Kabeldepot 12 ausgerüstet, das beidseitig jeweils in einer Nut 14 der Seitenwände 13 montiert ist. Bei weiteren Ausführungsbeispielen ist das LWL-Kabeldepot hingegen einteilig mit einem Boden des Gehäuses ausgebildet. Das LWL-Kabeldepot 12 ist mit Vorsprüngen 18 ausgerüstet, um ein in das LWL-Kabeldepot 12 eingelegtes Kabel zu halten. Außerdem ist das LWL-Kabeldepot 12 mit Rastnasen 19 ausgerüstet, die zum Befestigen der Spleißkassette 4 vorgesehen sind, indem die Spleißkassette 4 auf dem LWL-Kabeldepot 12 aufliegend eingerastet wird. Übrigens ist die Spleißkassette 4 hierdurch werkzeuglos montierbar und auch wieder lösbar.

Frontseitig ist das Gehäusegrundelement 2 mit einer Befestigungsplatte 15 mit einer Öffnung 16 ausgerüstet. In die Öffnung 16 lässt sich die Frontwand 7 mittels Rastnasen (der Frontwand 7) werkzeuglos einsetzen und befestigen sowie auch wieder lösen. Zudem ist die Befestigungsplatte 15 im Wesentlichen breiter als der Abstand der Seitenwände 13 und ragt somit seitlich über das übrige Gehäusegrundelement 2 hinaus. Dieser Umstand sowie die beidseitig jeweils im Bereich des resultierenden Überstands vorgesehenen Öffnungen 17 erlauben eine Montage der LWL-Anschlussvorrichtung z.B. in oder an einem Tragrahmen oder einem 19-Inch-Rack.

Im Übrigen ist das Gehäusegrundelement 2 mit Ausnehmungen 20 ausgerüstet, die zum Befestigen eines Deckels 3 und/oder eines Bodens mittels Rastnasen des Deckels 3 bzw. Bodens vorgesehen sind. Insgesamt ist bei diesem Ausführungsbeispiel das Gehäuse also an drei Seiten öffenbar, indem der Deckel 3, der Boden und die Frontwand 7 vom Gehäusegrundelement 2 lösbar sind. Hingegen unterscheiden sich weitere Ausführungsbeispiele dadurch, dass der Boden und/oder der Deckel einteilig mit den Seitenwänden und/oder mit der Rückwand ist.

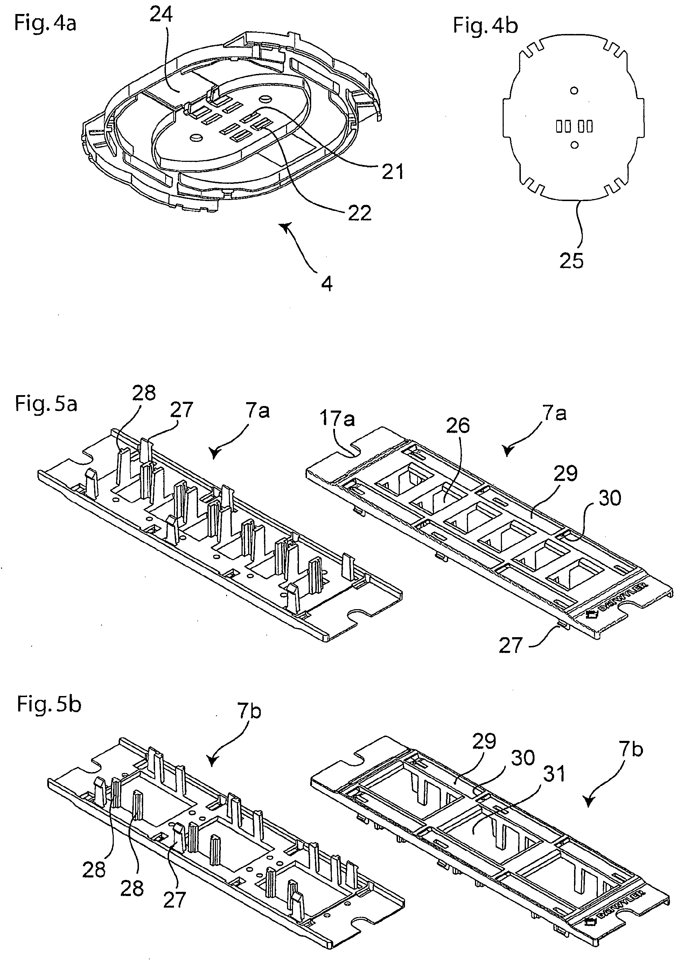

Weitere Ausführungsbeispiele unterscheiden sich von den vorhergehenden dadurch, dass der Teilesatz (unter anderem) die in Figur 4a dargestellte Spleißkassette 4 umfasst. Diese ist mit Ausnehmungen 21 ausgerüstet, in die die Rastnasen 19 des LWL-Kabeldepots 12 bei der Montage einrasten. Im Übrigen ist bei diesem Ausführungsbeispiel die Spleißkassette 4 mit Durchgangsöffnungen 22 für verlängerte Rastnasen 23 des LWL-Kabeldepots 12 ausgerüstet, sodass sich zwei Spleißkassetten 4 in einer gestapelten Anordnung, insbesondere auf dem LWL-Kabeldepot 12, montieren lassen. Hierbei rasten die verlängerten Rastnasen 23 in die Durchgangsöffnungen 22 der obenliegenden Spleißkassette 4 ein während sie die Durchgangsöffnungen 22 der darunterliegenden Spleißkassette 4 durchdringen. Dementsprechend umfasst der Teilesatz bei weiteren Ausführungsbeispielen (unter anderem) zwei oder mehr Spleißkassetten 4. Im Übrigen ist die Spleißkassette 4 mit einer Aufnahme 24 für einen Spleißkamm ausgerüstet.

Außerdem ist bei weiteren Ausführungsbeispielen zusätzlich wenigstens eine Spleißkassetten-Abdeckung 25 in dem Teilesatz enthalten, die sich auf der Spleißkassette 4 einrasten lässt. Ein Beispiel der Spleißkassetten-Abdeckung 25 ist in Figur 4b dargestellt. Mit der Spleißkassetten-Abdeckung 25 lässt sich verhindern, dass beim Öffnen des Gehäuses bereits in die Spleißkassette 4 eingelegte LWL-Kabel oder Spleiße unbeabsichtigt herausfallen können.

Weitere Ausführungsbeispiele unterscheiden sich von den zuvor beschriebenen dadurch, dass der Teilesatz als Alternative (unter anderem) die in Figur 5a dargestellte Frontwand 7a für das Gehäusegrundelement 2 umfasst. Die Frontwand 7a ist einteilig und im Wesentlichen aus Kunststoff. Hinsichtlich ihrer Breite entspricht sie im Wesentlichen der Höhe des Gehäusegrundelements 2 oder ist alternativ bis zu 1 mm, 2 mm, 3 mm oder 5 mm breiter als das Gehäusegrundelement 2 hoch ist, sodass sich mehrere LWL-Anschlussvorrichtungen in der Art eines Stapels anordnen lassen, wobei die Frontwände 7a bündig aneinandergrenzen können und hierbei gleichzeitig für eine einfachere (De-) Montage etwas Spiel zwischen den Gehäusegrundelementen verbleiben kann.

Die Frontwand 7a ist mit sechs in einer Reihe angeordneten Öffnungen 26 - alternativ z.B. auch mit vier, acht, zwölf oder 16 Öffnungen 26 - ausgerüstet, die zum Einsetzen und Befestigen von in den Öffnungen 26 einrastbaren LWL-Kupplungen (jeweils eine LC-Kupplung 5 pro Öffnung 26) vorgesehen sind. Hierzu sind auf der von der Frontseite abgewandten Seite Vorsprünge 28 als Widerlager für die LWL-Kupplungen angeordnet. Außerdem ist die Frontwand 7a mit Rastnasen 27 ausgerüstet, mit der die Frontwand 7a bei der Herstellung der LWL-Anschlussvorrichtung frontseitig an dem Gehäusegrundelement 2 eingerastet wird. Hierbei ist die Frontwand 7a, insbesondere auch durch den Nutzer, bei Bedarf wieder lösbar und erneut an dem Gehäusegrundelement 2 befestigbar. Zudem entspricht die Länge der Frontwand 7a im Wesentlichen der (maximalen) Breite des Gehäusegrundelements 2, insbesondere entspricht sie der Länge der Befestigungsplatte 15. Im Bereich der Öffnungen 17 der Befestigungsplatte 15 sind Aussparungen 17a an der Frontwand 7a vorgesehen. So lässt sich das (fertig montierte) Gehäusegrundelement 2 mit daran befestigter Frontwand 7a beispielsweise an einem Rahmen und/oder einem Regal anschrauben.

Außerdem ist die Frontwand 7a beidseitig entlang der Reihe von Öffnungen 26 mit jeweils einer Halterung für Etiketten ausgerüstet. Die Halterungen haben eine Aufnahme 29 sind in Gestalt einer Vertiefung oder Nut. Die Halterungen sind hierbei einteilig mit der Frontwand 7a ausgebildet. Entlang jeder der Halterungen sind jeweils zwei brückenartige Querstreben 30 angeordnet, um ein in die Aufnahme 29 eingelegtes Etikett, wie durch Ösen gefädelt, zu halten. Somit erlaubt die Frontwand 7a mittels der Aufnahme 29 wenigstens ein Etikett räumlich entlang der Öffnungen 26, sprich auch entlang von darin montierten LWL-Kupplungen, anzuordnen, wobei sich das Etikett werkzeuglos durch den Benutzer anbringen und auch wieder entnehmen lässt. Außerdem ist durch die Einteiligkeit der Frontwand 7a mit der Halterung kein weiteres Bauteil zur Befestigung eines Etiketts nötig.

Weitere Ausführungsbeispiele unterscheiden sich von den zuvor beschriebenen dadurch, dass der Teilesatz als Alternative (unter anderem) die in Figur 5b dargestellte Frontwand 7b für das Gehäusegrundelement 2 umfasst. Die Frontwand 7b unterscheidet sich im Wesentlichen von der Frontwand 7a dadurch, dass die Öffnungen 31 zum Einsetzen und Befestigen von zwei LWL-Kupplungen, insbesondere von zwei LC-Kupplungen 5, dimensioniert sind. Die Frontwand 7b weist insgesamt drei solche Öffnungen 31 auf, sodass die Frontwand 7b in Summe gleich viele LWL-Kupplungen aufnehmen kann wie die Frontwand 7a.

Weitere Ausführungsbeispiele unterscheiden sich von den vorhergehend beschriebenen dadurch, dass an der Frontwand 7 zusätzlich oder alternativ zu den Öffnungen für LC-Kupplungen auch MTP-Kupplungen oder auch Kupplungen anderer Lichtwellenleiter-Steckertypen angeordnet sind und dementsprechend bei der Herstellung der LWL-Anschlussvorrichtung auch solche Kupplungen selbst an der Frontwand 7 montiert werden.

## Patentansprüche

1. Teilesatz (1) zum Herstellen einer Lichtwellenleiter-Anschlussvorrichtung, wobei der Teilesatz (1) wenigstens eine Spleißkassette (4) für ein Lichtwellenleiter-Kabel, wenigstens eine erste Lichtwellenleiter-Kupplung (5), wenigstens eine zweite Lichtwellenleiter-Kupplung (6), wenigstens ein Lichtwellenleiter-Verbindungsstück (11) und ein Gehäusegrundelement (2) aufweist,
wobei das Gehäusegrundelement (2) für die Befestigung der wenigstens einen ersten Lichtwellenleiter-Kupplung (5) ausgerüstet ist,
wobei für eine erste Konfiguration der Lichtwellenleiter-Anschlussvorrichtung das Gehäusegrundelement (2) und die Spleißkassette (4) für die Befestigung der Spleißkassette (4) in dem Gehäusegrundelement (2) ausgerüstet sind, und
wobei für eine zweite, spleißkassettenlose Konfiguration der Lichtwellenleiter-Anschlussvorrichtung das Gehäusegrundelement (2) für die Befestigung der wenigstens einen zweiten Lichtwellenleiter-Kupplung (6) ausgerüstet ist,
wobei der Teilesatz (1) wenigstens eine Lichtwellenleiter-Kabeldurchführung aufweist, wobei für die erste Konfiguration der Lichtwellenleiter-Anschlussvorrichtung das Gehäusegrundelement (2) für die Befestigung der Lichtwellenleiter-Kabeldurchführung an einer Wand (9) des Gehäusegrundelements (2) ausgerüstet ist,
**dadurch gekennzeichnet, dass**
der Teilesatz zum Herstellen einer Lichtwellenleiter-Anschlussvorrichtung mit der ersten oder der zweiten Konfiguration eingerichtet ist, und das Gehäusegrundelement (2) mit wenigstens einer Öffnung versehen ist, wobei die Öffnung eingerichtet ist, dass sich in der Öffnung eine der wenigstens einen Lichtwellenleiter-Kabeldurchführung und alternativ eine der wenigstens einen ersten Lichtwellenleiter-Kupplung (5) montieren lässt; oder
dass der Teilesatz zum Herstellen einer Lichtwellenleiter-Anschlussvorrichtung mit der ersten und der zweiten Konfiguration eingerichtet ist, und das Gehäusegrundelement (2) mit wenigstens zwei Öffnungen versehen ist, wobei die Öffnungen eingerichtet sind, dass sich in den Öffnungen eine der wenigstens einen Lichtwellenleiter-Kabeldurchführung und alternativ eine der wenigstens einen ersten Lichtwellenleiter-Kupplung (5) montieren lässt.

2. Teilesatz (1) nach einem der vorhergehenden Ansprüche, wobei das Gehäusegrundelement (2) mit einem in dem Gehäusegrundelement (2) angeordneten Lichtwellenleiter-Kabeldepot (12) ausgerüstet ist, wobei die wenigstens eine Spleißkassette (4) und das Kabeldepot (12) für die Befestigung der wenigstens einen Spleißkassette (4) an dem Kabeldepot (12) ausgerüstet sind.

3. Teilesatz (1) nach einem der vorhergehenden Ansprüche, wobei der Teilesatz (1) eine Spleißkassetten-Abdeckung (25) für die wenigstens eine Spleißkassette (4) aufweist, wobei die Spleißkassetten-Abdeckung (25) und die Spleißkassette (4) für die Befestigung der Spleißkassetten-Abdeckung (25) an der Spleißkassette (4) ausgerüstet sind und wobei das Gehäusegrundelement (2) eingerichtet ist, die wenigstens eine Spleißkassette (4) mit der an ihr befestigten Spleißkassetten-Abdeckung (25) zu umschließen.

4. Teilesatz (1) nach einem der vorhergehenden Ansprüche, wobei der Teilesatz (1) eine Frontwand (7, 7a, 7b) für das Gehäusegrundelement (2) aufweist, wobei das Gehäusegrundelement (2) und die Frontwand (7, 7a, 7b) ausgerüstet sind, die Frontwand (7, 7a, 7b) werkzeuglos an dem Gehäusegrundelement (2) zu befestigen und wieder zu lösen.

5. Teilesatz (1) nach Anspruch 5, wobei die Frontwand (7, 7a, 7b) des Gehäusegrundelements (2) wenigstens eine Reihe von Öffnungen (26, 31) aufweist, wobei die Öffnungen (26, 31) jeweils für die Montage wenigstens einer der wenigstens einen ersten Lichtwellenleiter-Kupplung (5) eingerichtet sind und wobei die Frontwand (7, 7a, 7b) benachbart zu der wenigstens einen Reihe von Öffnungen (26, 31) wenigstens eine Halterung für ein Etikett aufweist.

6. Teilesatz (1) nach Anspruch 6, wobei sich die wenigstens eine Halterung im Wesentlichen über die Länge der wenigstens einen Reihe von Öffnungen (26, 31) erstreckt.

7. Teilesatz (1) nach einem der vorhergehenden Ansprüche, wobei der Teilesatz (1) sechs, zwölf oder 24 LC-Kupplungen (5) als erste Lichtwellenleiter-Kupplungen (5) und eine, zwei, drei oder vier MTP-Kupplungen (6) als zweite Lichtwellenleiter-Kupplungen (6) aufweist.

8. Verfahren zur Herstellung einer ersten und einer zweiten Konfiguration einer Lichtwellenleiter-Anschlussvorrichtung aus einem Teilesatz (1) gemäß einem der Ansprüche 1 bis 7, wobei
für die erste Konfiguration der Lichtwellenleiter-Anschlussvorrichtung die Spleißkassette (4) in dem Gehäusegrundelement (2) montiert wird und die wenigstens eine erste Lichtwellenleiter-Kupplung (5) an dem Gehäusegrundelement (2) befestigt wird, und
für die zweite, spleißkassettenlose Konfiguration der Lichtwellenleiter-Anschlussvorrichtung die wenigstens eine erste Lichtwellenleiter-Kupplung (5) und die wenigstens eine zweite Lichtwellenleiter-Kupplung (6) an dem Gehäusegrundelement (2) befestigt wird und wenigstens ein Lichtwellenleiter-Verbindungsstück (11) an einer ersten und zweiten Lichtwellenleiter-Kupplung (5, 6) angeschlossen wird.

9. Verwendung eines Teilesatzes (1) gemäß einem der Ansprüche 1 bis 7 zur Herstellung einer Lichtwellenleiter-Anschlussvorrichtung nach einem Verfahren gemäß Anspruch 8.

## Claims

1. A kit of parts (1) for producing a fibre optic cable connection device, wherein the kit of parts (1) has at least one splice cassette (4) for a fibre optic cable, at least one fibre optic cable coupling (5), at least one second fibre optic coupling (6), at least one fibre optic cable connector piece (11) and a housing base element (2),
wherein the housing base element (2) is equipped for being attached to the at least one first fibre optic cable coupling (5),
wherein for a first configuration of the fibre optic cable connection device, the housing base element (2) and the splice cassette (4) are equipped for being attached to the splice cassette (4) in the housing base element (2), and
wherein for a second configuration of the fibre optic cable connection device without a splice cassette, the housing base element (2) is equipped for attaching the at least one second fibre optic cable coupling (6),
wherein the kit of parts (1) has at least one fibre optic cable gland, wherein for the first configuration of the fibre optic cable connection device, the housing base element (2) is equipped for attaching the fibre optic cable gland to a wall (9) of the housing base element (2),
**characterised in that**
the kit of parts is arranged for producing a fibre optic cable connection device with the first or the second configuration, and the housing base element (2) is provided with at least one opening, which opening is arranged such that one of the at least one fibre optic cable gland and alternatively one of the at least one first fibre optic cable coupling (5) can be mounted in the opening; or
**in that** the kit of parts is designed for producing a fibre optic cable connection device with the first and second configurations, and the housing base element (2) is provided with at least two openings, which openings are designed such that one of the at least one fibre optic cable gland and alternatively one of the at least one first fibre optic cable coupling (5) can be mounted in the openings.

2. The kit of parts (1) as claimed in the preceding claim, wherein the housing base element (2) is equipped with a fibre optic cable depot (12) provided in the housing base element (2), wherein the at least one splice cassette (4) and the cable depot (12) are equipped for attaching the at least one splice cassette (4) to the cable depot (12).

3. The kit of parts (1) as claimed in any one of the preceding claims, wherein the kit of parts (1) has a splice cassette cover (25) for the at least one splice cassette (4), wherein the splice cassette cover (25) and the splice cassette (4) are equipped for attaching the splice cassette cover (25) to the splice cassette (4), and wherein the housing base element (2) is designed to surround the at least one splice cassette (4) with the splice cassette cover (25) attached thereto.

4. The kit of parts (1) as claimed in any one of the preceding claims, wherein the kit of parts (1) has a front wall (7, 7a, 7b) for the housing base element (2), wherein the housing base element (2) and the front wall (7, 7a, 7b) are equipped to attach and detach the front wall (7, 7a, 7b) to and from the housing base element (2) without the use of a tool.

5. The kit of parts (1) as claimed in claim 5, wherein the front wall (7, 7a, 7b) of the housing base element (2) has at least one row of openings (26, 31), wherein each of the openings (26, 31) is arranged for mounting at least one of the at least one first fibre optic cable couplings (5), and wherein the front wall (7, 7a, 7b) has, adjacent to the at least one row of openings (26, 31), at least one holder for a label.

6. The kit of parts (1) as claimed in claim 6, wherein the at least one holder extends substantially over the length of the at least one row of openings (26, 31).

7. The kit of parts (1) as claimed in any one of the preceding claims, wherein the kit of parts (1) has six, twelve or 24 LC couplings (5) as first fibre optic cable couplings (5), and one, two, three or four MTP couplings (6) as the second fibre optic cable couplings (6).

8. A method for producing first and second configurations of a fibre optic cable connection device from a kit of parts (1) as claimed in any one of claims 1 to 7, wherein
for the first configuration of the fibre optic cable connection device, the splice cassette (4) is mounted in the housing base element (2) and the at least one first fibre optic cable coupling (5) is attached to the housing base element (2), and
for the second configuration of the fibre optic cable connection device without a splice cassette, the at least one first fibre optic cable coupling (5) and the at least one second fibre optic cable coupling (6) are attached to the housing base element (2), and at least one fibre optic cable connection piece (11) is connected to first and second fibre optic cable couplings (5, 6).

9. The use of a kit of parts (1) as claimed in any one of claims 1 to 7 for producing a fibre optic cable connection device according to a method as claimed in claim 8.

## Revendications

1. Ensemble de pièces (1) pour la fabrication d'un dispositif de raccordement de fibres optiques, dans lequel l'ensemble de pièces (1) présente au moins une cassette d'épissure (4) pour un câble à fibres optiques, au moins un premier dispositif de couplage de fibres optiques (5), au moins un second dispositif de couplage de fibres optiques (6), au moins un connecteur de fibres optiques (11) et un élément de base de boîtier (2),
dans lequel l'élément de base de boîtier (2) est équipé pour la fixation de l'au moins un premier dispositif de couplage de fibres optiques (5),
dans lequel, pour une première configuration du dispositif de raccordement de fibres optiques, l'élément de base de boîtier (2) et la cassette d'épissure (4) sont équipés pour la fixation de la cassette d'épissure (4) dans l'élément de base de boîtier (2), et
dans lequel, pour une seconde configuration sans cassette d'épissure du dispositif de raccordement de fibres optiques, l'élément de base de boîtier (2) est équipé pour la fixation de l'au moins un second dispositif de couplage de fibres optiques (6),
dans lequel l'ensemble de pièces (1) présente au moins un passage de câble à fibre optique, dans lequel, pour la première configuration du dispositif de raccordement de fibres optiques, l'élément de base de boîtier (2) est équipé pour la fixation du passage de câble à fibre optique à une paroi (9) de l'élément de base de boîtier (2),
**caractérisé en ce que**
l'ensemble de pièces est conçu pour la fabrication d'un dispositif de raccordement de fibres optiques avec la première ou la seconde configuration, et l'élément de base de boîtier (2) est pourvu d'au moins une ouverture, dans lequel l'ouverture est conçue pour qu'un de l'au moins un passage de câble à fibre optique et en variante un de l'au moins un premier dispositif de couplage de fibres optiques (5) puissent être montés dans l'ouverture ; ou
**que** l'ensemble de pièces est conçu pour la fabrication d'un dispositif de raccordement de fibres optiques avec la première et la seconde configuration, et l'élément de base de boîtier (2) est pourvu d'au moins deux ouvertures, dans lequel les ouvertures sont conçues pour qu'un de l'au moins un passage de câble à fibre optique et en variante un de l'au moins un premier dispositif de couplage de fibres optiques (5) puissent être montés dans les ouvertures.

2. Ensemble de pièces (1) selon l'une quelconque des revendications précédentes, dans lequel l'élément de base de boîtier (2) est équipé d'un support de câble à fibre optique (12) disposé dans l'élément de base de boîtier (2), dans lequel l'au moins une cassette d'épissure (4) et le support de câble (12) sont équipés pour la fixation de l'au moins une cassette d'épissure (4) au support de câble (12).

3. Ensemble de pièces (1) selon l'une quelconque des revendications précédentes, dans lequel l'ensemble de pièces (1) présente un couvercle de cassette d'épissure (25) pour l'au moins une cassette d'épissure (4), dans lequel le couvercle de cassette d'épissure (25) et la cassette d'épissure (4) sont équipés pour la fixation du couvercle de cassette d'épissure (25) à la cassette d'épissure (4) et dans lequel l'élément de base de boîtier (2) est conçu pour entourer l'au moins une cassette d'épissure (4) avec le couvercle de cassette d'épissure (25) fixé à celle-ci.

4. Ensemble de pièces (1) selon l'une quelconque des revendications précédentes, dans lequel l'ensemble de pièces (1) présente une paroi avant (7, 7a, 7b) pour l'élément de base de boîtier (2), dans lequel l'élément de base de boîtier (2) et la paroi avant (7, 7a, 7b) sont équipés pour fixer la paroi avant (7, 7a, 7b) à l'élément de base de boîtier (2) et détacher à nouveau celle-ci, sans outil.

5. Ensemble de pièces (1) selon la revendication 5, dans lequel la paroi avant (7, 7a, 7b) de l'élément de base de boîtier (2) présente au moins une rangée d'ouvertures (26, 31), dans lequel les ouvertures (26, 31) sont conçues respectivement pour le montage d'au moins un de l'au moins un premier dispositif de couplage de fibres optiques (5) et dans lequel la paroi avant (7, 7a, 7b) présente de manière contiguë à l'au moins une rangée d'ouvertures (26, 31) au moins un support pour une étiquette.

6. Ensemble de pièces (1) selon la revendication 6, dans lequel l'au moins un support s'étend sensiblement sur la longueur de l'au moins une rangée d'ouvertures (26, 31).

7. Ensemble de pièces (1) selon l'une quelconque des revendications précédentes, dans lequel l'ensemble de pièces (1) présente six, douze ou 24 dispositifs de couplage LC (5) en tant que premiers dispositifs de couplage de fibres optiques (5) et un, deux, trois ou quatre dispositifs de couplage MTP (6) en tant que seconds dispositifs de couplage de fibres optiques (6).

8. Procédé de fabrication d'une première et d'une seconde configuration d'un dispositif de raccordement de fibres optiques à partir d'un ensemble de pièces (1) selon l'une quelconque des revendications 1 à 7, dans lequel
pour la première configuration du dispositif de raccordement de fibres optiques, la cassette d'épissure (4) est montée dans l'élément de base de boîtier (2) et l'au moins un premier dispositif de couplage de fibres optiques (5) est fixé à l'élément de base de boîtier (2), et
pour la seconde configuration sans cassette d'épissure du dispositif de raccordement de fibres optiques, l'au moins un premier dispositif de couplage de fibres optiques (5) et l'au moins un second dispositif de couplage de fibres optiques (6) sont fixés à l'élément de base de boîtier (2) et au moins un connecteur de fibres optiques (11) est raccordé à un premier et un second dispositifs de couplage de fibres optiques (5, 6).

9. Utilisation d'un ensemble de pièces (1) selon l'une quelconque des revendications 1 à 7 pour la fabrication d'un dispositif de raccordement de fibres optiques selon un procédé selon la revendication 8.
